# EUROPÄISCHE PATENTSCHRIFT

(11) **EP 2 844 887 B1**
(45) Veröffentlichungstag und Bekanntmachung des Hinweises auf die Patenterteilung: **10.03.2021**
(21) Anmeldenummer: 13715611.3
(22) Anmeldetag: 09.04.2013
(51) Int. Cl.: F16D 65/18, F16D 121/22

(54) **ELEKTROMAGNETISCH BETÄTIGBARE BREMSE MIT EINER BREMSSPULE**
ELECTROMAGNETICALLY ACTUATABLE BRAKE WITH A BRAKE COIL
FREIN À ACTIONNEMENT ÉLECTROMAGNÉTIQUE DOTÉ D'UNE BOBINE DE FREIN

(30) Priorität: 03.05.2012 DE 102012008654; 28.09.2012 DE 102012019135
(43) Veröffentlichungstag der Anmeldung: 11.03.2015
(73) Patentinhaber: SEW-EURODRIVE GmbH & Co. KG, 76646 Bruchsal (DE)
(72) Erfinder: HAGEMANN, Björn, 77955 Ettenheim (DE)
(86) Internationale Anmeldenummer: PCT/EP2013/001039
(87) Internationale Veröffentlichungsnummer: WO 2013/164063

(56) Entgegenhaltungen:
- FR-A1- 2 605 155
- US-A- 2 820 928
- US-A- 4 568 862
- US-A1- 2012 073 916

## Beschreibung

Die Erfindung betrifft eine elektromagnetisch betätigbare Bremse mit einer Bremsspule.

Es ist allgemein bekannt, dass Bremsspulen von elektromagnetisch bestätigbaren Bremsen eine Ringspule aufweisen zur Erzeugung von Magnetfeld.

Aus der PCT/EP2010/006747 ist eine Bremsspulenanordnung bekannt, die aus mehreren in Umfangsrichtung hintereinander angeordneten Teilspulen zusammengesetzt ist, so dass ein verringerter Streufluss bewirkt wird.

Aus der US 2 820 928 A ist eine elektrisch gesteuerte Bremse bekannt.

Aus der US 4 568 862 A ist ein kommutatorloser Gleichstrommotor mit elektronischer Kommutierung bekannt.

Aus der US 2012/073916 A1 ist eine elektromagetisch betätigbare Bremsanordnung bekannt.

Aus der FR 2 605 155 A1 ist eine elektromagnetisch betätigbare Bremse für einen Motor bekannt.

Der Erfindung liegt daher die Aufgabe zugrunde, eine elektromagnetisch betätigbare Bremse mit einer Bremsspule weiterzubilden, wobei eine einfache kostengünstig herstellbare Ausführung erreicht werden.

Erfindungsgemäß wird die Aufgabe bei der elektromagnetisch betätigbare Bremse mit einer Bremsspule nach den in Anspruch 1 oder 6 angegebenen Merkmalen gelöst.

Wichtige Merkmale der Erfindung bei der elektromagnetisch betätigbaren Bremse mit einer Bremsspule sind, dass die Bremsspule eine relativ zur Bremsspule drehbar angeordnete Bremsrotorwelle aufweist, wobei die Bremsspule mehrere Teilspulen aufweist, wobei die Teilspulen in Umfangsrichtung hintereinander angeordnet sind und zur jeweils in Umfangsrichtung nächstbenachbarten Teilspule einen unterschiedlichen Wicklungssinn aufweisen, so dass die Teilspulen mit einem ersten Wicklungssinn eine erste Sorte und die Teilspulen mit dem entgegengesetzten Wicklungssinn eine zweite Sorte bilden,
wobei die Teilspulen durch zumindest eine erste Wellenwicklung und eine zweite Wellenwicklung gebildet sind,
wobei jede der beiden Wellenwicklungen in Umfangsrichtung umlaufend verlegt ist, wobei der Radialabstand der jeder der beiden Wellenwicklungen eine periodische Funktion des Umfangswinkels ist,
wobei jeder der beiden Wellenwicklungen einen in Umfangsrichtung umlaufend verlegten Wicklungsdraht aufweist, dessen Radialabstand eine periodische Funktion des Umfangswinkels ist,
- wobei die erste und zweite Wellenwicklung gleichartig ausgeführt sind, aber zueinander einen Versatz in Umfangsrichtung aufweisen,
- und/oder wobei die zweite Wellenwicklung zur ersten invertiert ist bezogen auf einen Kreis, dessen Radialabstand dem Mittelwert aus maximalem und minimalem Radialabstand der Funktion entspricht, insbesondere so dass die erste Wellenwicklung den minimalen Radialabstandswert aufweist bei denjenigen Umfangswinkelwerten, bei denen die zweite Wellenanordnung den maximalen Radialabstandswert aufweist.

Von Vorteil ist dabei, dass eine einfach herstellbare Wickelanordnung erreicht ist, indem der Wicklungsdraht mit periodisch schwankendem Radialabstand in Umfangsrichtung verlegbar ist, also keine Richtungsumkehr bei jeder Teilspule auszuführen ist. Außerdem sind nur zwei solcher einfach herzustellenden Wicklungen notwendig. Somit ist also eine einfach herstellbare Bremsspule ausführbar

Erfindungsgemäß ist die erste Wellenwicklung in einem axialen Bereich angeordnet, der sich von demjenigen axialen Bereich unterscheidet, in welchem die zweite Wellenwicklung angeordnet ist. Von Vorteil ist dabei, dass ein in Umfangsrichtung gesehen ausgeführtes Überlappen der nächstbenachbarten Wicklungsseiten von Teilspulen ermöglicht ist.

Bei einer vorteilhaften Ausgestaltung ist die periodische Funktion eine Rechteckfunktion, insbesondere mit abgerundeten Eckbereichen. Von Vorteil ist dabei, dass eine möglichst große Wickelfläche abdeckbar ist.

Bei einer vorteilhaften Ausgestaltung ist die erste Wellenwicklung in einem ersten axialen Bereich angeordnet und die zweite Wellenwicklung in einem davon unterschiedlichen axialen Bereich, der von dem ersten axialen Bereich beabstandet ist oder höchstens an diesen angrenzt, insbesondere nicht aber überlappt. Von Vorteil ist dabei, dass die Wickelstränge in Umfangsrichtung nicht nebeneinanderliegen müssen, sondern sogar im selben Umfangswinkelbereich angeordnet werden können. Somit ist eine hohe Anzahl von Teilspulen in Umfangsrichtung anordenbar und daher eine hohe Wicklungsdichte erreichbar.

Bei einer vorteilhaften Ausgestaltung ist jede Teilspule mit ihrer in Umfangsrichtung nächstbenachbarten Teilspule zumindest über zwei Wicklungsdrahtabschnitte direkt verbunden, insbesondere wobei also die Wicklungsdrahtabschnitte jeweils direkt zwischen den Teilspulenwicklungen verlaufen, ohne über andere Teilspulenwicklungen geführt zu sein. Von Vorteil ist dabei, dass ein resultierender Kreisstrom entlang der Umfangsrichtung der Bremsspule vermeidbar ist. Denn durch die Verbindung über zwei Wicklungsdrahtabschnitte wird erreichbar, dass an der radialen Innenseite und an der radialen Außenseite die stets gleiche Anzahl von Wicklungsdrähten verläuft und die jeweils in Umfangsrichtung zueinander nächstbenachbarten radialen Innenseiten von Teilspulen beziehungsweise Außenseiten von Teilspulen zueinander die umgekehrte Bestromungsrichtung aufweisen. Daher ist kein resultierender Kreisstrom vorhanden und somit das Streufeld vernachlässigbar.

Wichtige Merkmale bei der elektromagnetisch betätigbaren Bremse mit einer Bremsspule nach Anspruch 6 sind, dass die Bremsspule eine relativ zur Bremsspule drehbar angeordnete Bremsrotorwelle aufweist,
wobei die Bremsspule mehrere Teilspulen
wobei die Teilspulen in Umfangsrichtung hintereinander angeordnet sind und zur jeweils in Umfangsrichtung nächstbenachbarten Teilspule einen unterschiedlichen Wicklungssinn aufweisen,
wobei die Bremsspule eine die Teilspulen bildende und/oder umfassende Schleifenwicklung.

Von Vorteil ist dabei, dass die Schleifenwicklung in einfacher Weise herstellbar ist und außerdem ein resultierender Kreisstrom vermeidbar ist und daher auch das Streufeld vernachlässigbar ist

Erfindungsgemäß sind in Umfangsrichtung nächstbenachbarte Teilspulen in unterschiedlichen axialen Bereichen angeordnet. Von Vorteil ist dabei, dass ein Überlappen der Wicklungen in Umfangsrichtung ermöglicht ist und somit eine hohe Anzahl von Teilspulen in Umfangsrichtung anordenbar ist.

Bei einer vorteilhaften Ausgestaltung ist die Schleifenwicklung aus separat bewickelten jeweiligen Teilspulen zusammengesetzt ist. Von Vorteil ist dabei, dass eine einfache Herstellung ermöglicht ist.

Wichtige Merkmale bei der elektromagnetisch betätigbaren Bremse sind, dass die Teilspulen in Umfangsrichtung regelmäßig voneinander beabstandet sind,
insbesondere wobei die Teilspulen auf demselben Radialabstand angeordnet sind. Von Vorteil ist dabei, dass eine einfache Herstellung einer hochsymmetrischen Bremsspule ausführbar ist.

Bei einer vorteilhaften Ausgestaltung sind die Teilspulen axial orientiert, also die von der jeweiligen Teilspulenwicklung erzeugte Magnetisierungsrichtung axial orientiert ist, also senkrecht zur Umfangsrichtung und/oder parallel zur Symmetrieachse der Bremsspule und/oder parallel zur Bremsrotorwellenachse. Von Vorteil ist dabei, dass vom erzeugten Magnetfeld der Teilspulen eine axial bewegbar, aber drehfest mit der Bremsspule verbundene Ankerscheibe anziehbar ist entgegen der von Federelementen erzeugten Federkraft, welche ebenfalls auf die Ankerscheibe wirkt. Bei Ausfalls der Bestromung der Teilspulen wird die Ankerschiebe von den Federelementen auf einen mit der Bremsrotorwelle drehfest, aber axial verschiebbar angeordneten Bremsbelagträger einer Bremsscheibe gedrückt, so dass diese wiederum mit ihrem, auf ihrer von der Ankerschiebe abgewandten Seite angeordneten weiteren Bremsbelag auf eine mit der Bremsspule fest verbundene Bremsfläche gedrückt wird.

Bei einer vorteilhaften Ausgestaltung weist jede Wicklung mehrere, zumindest abschnittsweise parallel geführte Wicklungsdrähte auf, so dass die Windungszahl jeder Teilspule größer als 1 ist. Von Vorteil ist dabei, dass ein starkes Magnetfeld erzeugbar ist.

Die Erfindung wird nun anhand von Abbildungen näher erläutert:
In der Figur 1 ist zur Erläuterung des technischen Hintergrundes eine Draufsicht auf eine nicht erfindungsgemäße Bremsspule gezeigt, die aus in Schleifenwicklung zusammengesetzten Einzelspulen besteht.
In der Figur 2 ist eine Draufsicht auf eine andere erfindungsgemäße Bremsspule gezeigt, deren Teilspulen in verschiedenen axialen Bereichen angeordnet ist.
In der Figur 3 ist zur Erläuterung des technischen Hintergrundes eine Draufsicht auf eine andere nicht erfindungsgemäße Bremsspule gezeigt, deren Teilspulen überlappend angeordnet sind.
In der Figur 4 ist eine Draufsicht auf eine erste Lage einer anderen erfindungsgemäßen Bremsspule gezeigt, deren Teilspulen mittels einer in der Lage, also in einem ersten axialen Bereich, angeordneten Wellenwicklung erzeugt sind.
In der Figur 5 ist eine Draufsicht auf eine zweite Lage der Bremsspule nach Figur 4 gezeigt, wobei die Teilspulen mittels einer in der zweiten Lage, also in einem zweiten zum ersten unterschiedlichen axialen Bereich, angeordneten Wellenwicklung erzeugt sind.
In der Figur 6 ist eine Draufsicht auf die aus der ersten und zweiten Lage der Figuren 4 und 5 zusammengesetzte Bremsspule gezeigt.
In der Figur 7 ist ein Wickelschema zur Figur 1 gezeigt, das aber auch auf die anderen Ausführungsbeispiele mit Schleifenwicklung anwendbar ist. Dabei ist allerdings effektiv ein Restkreisstrom vorhanden.
In der Figur 8 ist ein alternatives Wickelschema gezeigt, das im Unterschied zur Figur 7 effektiv keinen Restkreisstrom aufweist.
In der Figur 9 sind die Wickelschemata der Wellenwicklungen im oberen Teil der Figur 9 gezeigt, deren Zusammensetzung im unteren Teil gezeigt ist.

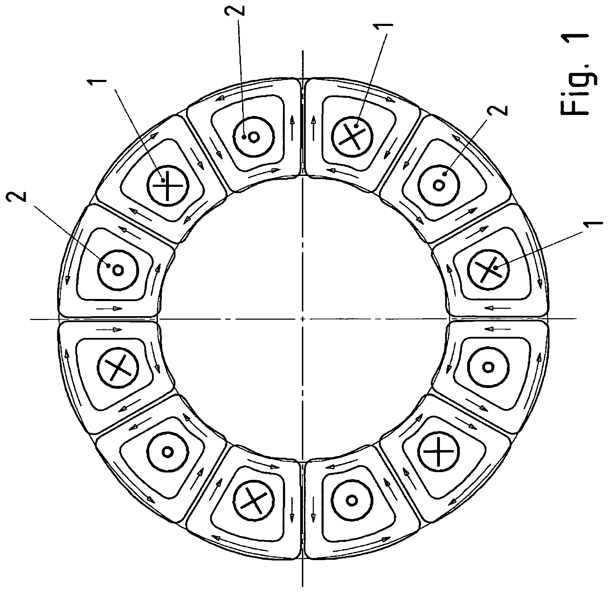

Wie in Figur 1 gezeigt, wird die Bremssule der erfindungsgemäßen elektromagnetisch betätigbaren Bremse aus mehreren in Umfangsrichtung gleichmäßig voneinander beabstandeten Teilspulen angeordnet.

Die Teilspulen weisen den gleichen Radialabstand zur Bremsrotorwellenachse auf.

Bei Bestromung zieht das erzeugte Magnetfeld eine ferromagnetisch ausgeführte, axial bewegbar angeordnete, axial von den Teilspulen beabstandete, drehfest am Gehäuse festgelegte Ankerscheibe an, so dass eine entgegenwirkende Federkraft von Federelementen überwunden wird und somit die Ankerscheibe von einem mit der Bremsrotorwelle drehfest verbundenen, axial bewegbarer Bremsbelagträger mit beidseitig axial angeordneten Bremsbelägen abgehoben wird. In diesem Betriebszustand ist die Bremse gelüftet und das Bemsmoment nicht wirksam. Bei abgeschalteter Bestromung entfällt die magnetische Anziehungskraft und die Ankerscheibe wird mit der Federkraft von Federelementen gegen den Bremsbelagträger mit beidseitig axial angeordneten Bremsbelägen, der wiederum gegen eine mit dem Gehäuse und somit mit dem Spulenkörper der Bremsspule fest verbundenen Bremsfläche gedrückt.

Jede Teilspule erzeugt ein zum Magnetfeld einer jeweils in Umfangsrichtung zu ihr nächstbenachbarten Teilspule entgegengesetzt gerichtetes Magnetfeld. Somit ist in Umfangsrichtung eine abwechselnde Magnetisierung vorhanden, da die durch die Teilspulen gebildeten Magnetpole entgegengesetzt sind zu ihrem in Umfangsrichtung nächsten Nachbarn.

Die Anzahl der Teilspulen ist dabei gerade. Die Teilspulen sind im selben axialen Bereich angeordnet. Daher bilden die Teilspulenwicklungen eine ebene Anordnung.

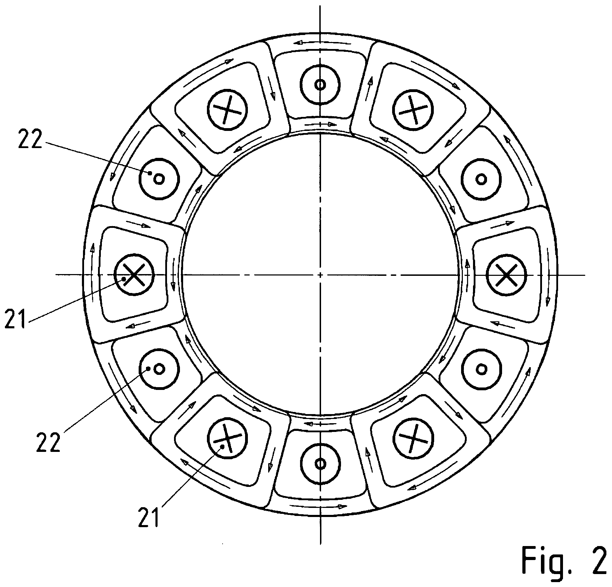

Wie in Figur 2 gezeigt, sind die Teilspulen, welche das in axialer Richtung orientierte Magnetfeld erzeugen, also die erste Sorte Teilspulen, in einem anderen axialen Bereich angeordnet als diejenigen Teilspulen, welche das entgegengesetzt zur axialen Richtung orientierte Magnetfeld erzeugen, also die zweite Sorte Teilspulen. Somit ist eine erste Sorte Teilspulen axial über der anderen Sorte Teilspulen angeordnet. Der Wicklungssinn der Teilspulen der ersten Sorte ist zueinander gleich. Ebenso ist der Wicklungssinn der Teilspulen der zweiten Sorte zueinander gleich.

Somit ist eine höhere Wicklungsdichte erreichbar.

Im Unterschied zum Ausführungsbeispiel nach Figur 1 ist durch die axial unterschiedliche Anordnung der beiden Sorten der Teilspulen in Umfangsrichtung eine höhere Anzahl von Teilspulen vorsehbar beziehungsweise in Umfangsrichtung breitere Teilspulen.

Wie in Figur 2 gezeigt, sind die Anordnung der ersten und zweiten Teilspulen mit Ausnahme des Wicklungssinns gleichartig aufgebaut und in Umfangsrichtung gegeneinander verdreht. Dieser Umfangswinkelversatz in Umfangsrichtung beträgt vorzugsweise im Wesentlichen die Hälfte des Winkelabstandes zweier in Umfangsrichtung nächstbenachbarten Teilspulen. Somit ist stets eine Teilspule der ersten Sorte nächstbenachbart zu einer Teilspule der zweiten Sorte.

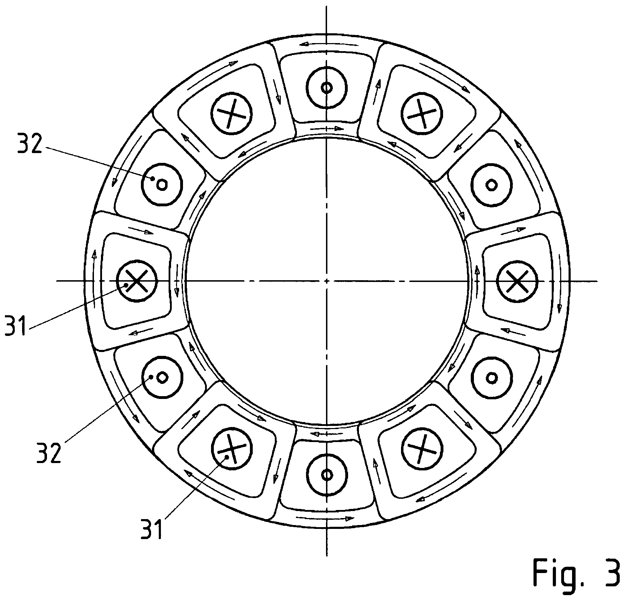

Wie in Figur 3 gezeigt, ist eine überlappende Anordnung der Teilspulen als alternatives erfindungsgemäßes Ausführungsbeispiel gezeigt. Im Unterschied zum Ausführungsbeispiel nach Figur 2 ist hierbei die erste und zweite Sorte der Teilspulen im gleichen axialen Bereich angeordnet, wobei sie überlappend angeordnet sind. Dabei überlappt insbesondere ein von einer jeweiligen Teilspule überdeckter Umfangswinkelbereich mit dem von der in Umfangsrichtung nächstbenachbarten Teilspule in Umfangsrichtung überdeckten Umfangswinkelbereich.

Wiederum sind die Anordnung der ersten und zweiten Teilspulen mit Ausnahme des Wicklungssinns gleichartig aufgebaut und in Umfangsrichtung gegeneinander verdreht. Der Umfangswinkelversatz in Umfangsrichtung beträgt vorzugsweise wiederum im Wesentlichen die Hälfte des Winkelabstandes zweier in Umfangsrichtung nächstbenachbarten Teilspulen. Somit ist stets eine Teilspule der ersten Sorte nächstbenachbart zu einer Teilspule der zweiten Sorte.

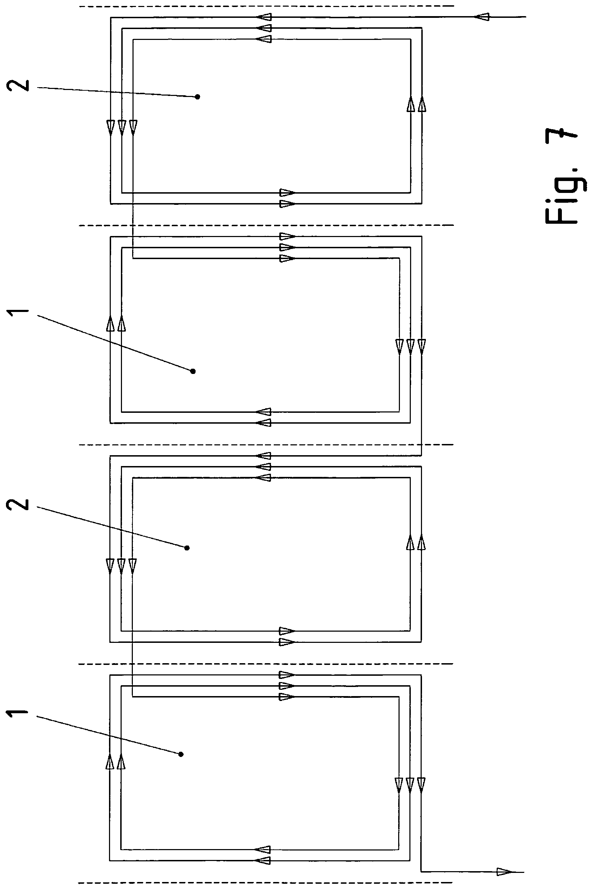

In der Figur 7 ist ein zu dem Schleifenwicklungsaufbau zugehöriges Wickelschema gezeigt, wobei an der radialen Innenseite eines Pols, also einer Teilspule erster Sorte, zwei Leitungen in Umfangsrichtung führen und an der radialen Innenseite des in Umfangsrichtung nächstbenachbarten Pols drei Leitungen in entgegengesetzte Richtung führen. Auch an der radialen Außenseite der benachbarten Pole weisen die Leitungen eine zueinander unterschiedliche Anzahl und Richtung auf. Somit entsteht aber ein unterbrochener resultierender Kreisstrom an der radialen Innenseite und an der radialen Außenseite.

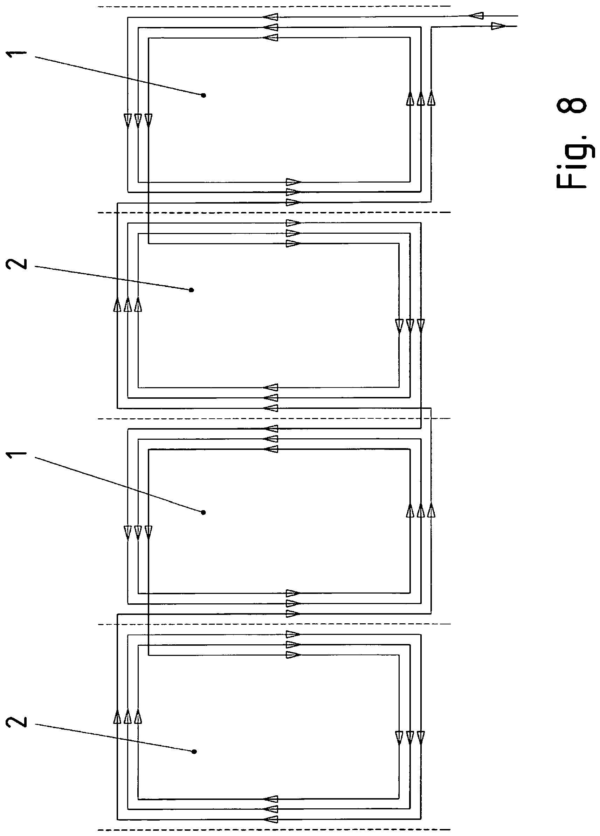

Daher ist in Figur 8 ein verbessertes Wickelschema gezeigt, das keine resultierenden Kreisströme aufweist. Denn an der radialen Innen Seite der Pole sind stets drei Leitungen in beziehungswiese entgegengesetzt zur Umfangsrichtung geführt. Im Unterschied zur Figur 7 sind bei der Figur 8 von jeder Teilspulenwicklung zur nächstbenachbarten Wicklung nicht nur ein Wicklungsdraht, sondern zwei geführt.

Bei anderen Ausführungsbeispielen ist auch eine von drei unterschiedliche Windungszahl N bei den Teilspulen ausführbar. Dabei sind dann an der radialen Innenseite und an der radialen Außenseite jeweils N Leitungen geführt. Ebenso sind N Leitungen an den der jeweils benachbarten Teilspule zugewandten Seiten geführt, so dass dort ein resultierender Strom durch 2N Leitungen führt. Somit ist kein resultierender Kreisstrom an der radialen Innenseite vorhanden und auch kein resultierender Kreisstrom an der radialen Außenseite.

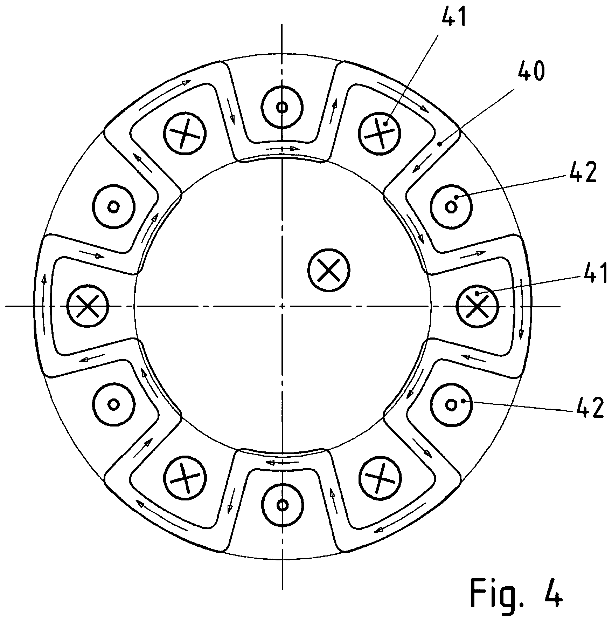

Die in Figur 4 gezeigte Anordnung stellt eine Wellenwicklung dar. Dabei ist der Wicklungsdraht 40 in Umfangsrichtung umlaufend verlegt, wobei er einen mäandrierenden Verlauf aufweist. Somit ist der Radialabstand des Wicklungsdrahts eine periodische Funktion des Umfangswinkels. Die in Figur 4 gezeigte Funktion entspricht im Wesentlichen einer Rechteckfunktion, wobei die Ecken des Rechtecks aus Fertigungsgründen abgerundet ausgeführt sind.

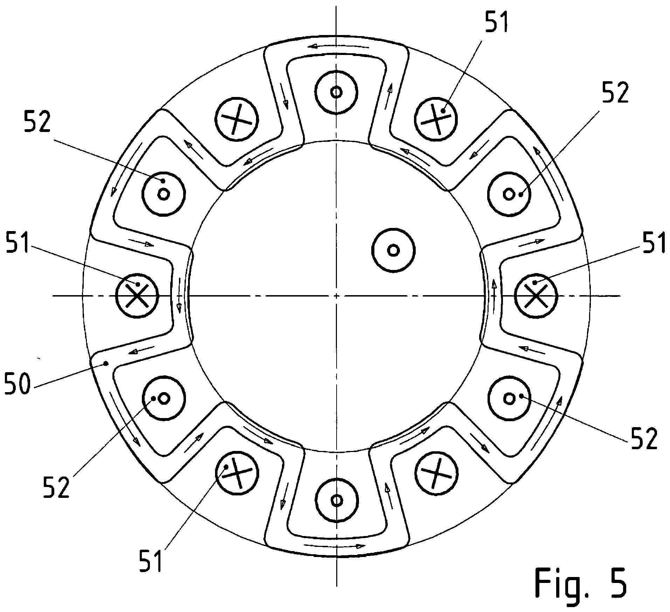

Die in Figur 5 gezeigte Wellenwicklung unterscheidet sich von der in Figur 4 gezeigten dadurch, dass sie zu der dortigen Rechteckfunktion invertiert ist, wobei die Invertierung bezüglich eines Kreises ausgeführt ist, dessen Radialabstand dem Mittelwert aus maximalem und minimalem Radialabstand der Funktion entspricht. Somit weist die Wellenwicklung nach Figur 4 den minimalen Radialabstandswert auf bei denjenigen Umfangswinkelwerten, bei denen die Wellenanordnung nach Figur 5 den maximalen Radialabstandswert aufweist.

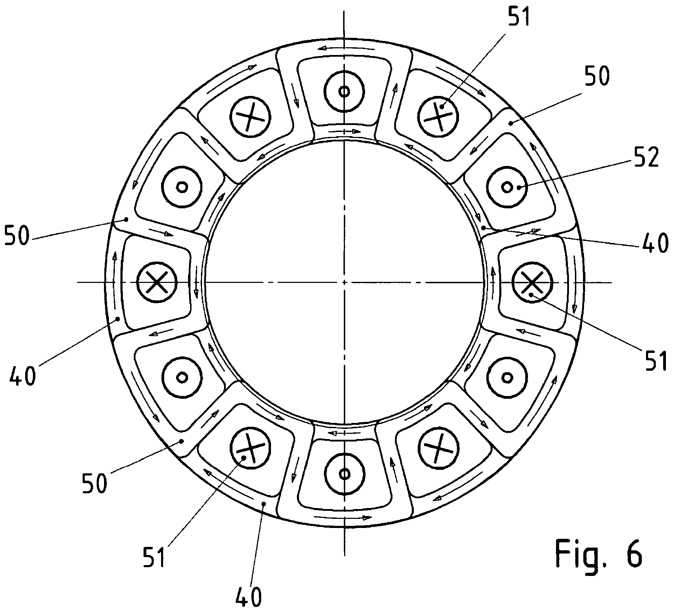

Bei dem Ausführungsbeispiel nach Figur 6 ist die Wellenwicklung nach Figur 4 in einem ersten axialen Bereich angeordnet und die Wellenwicklung nach Figur 5 in einem davon unterschiedlichen axialen Bereich, der von dem ersten beabstandet ist oder höchstens an diesen angrenzt.

Wie in Figur 6 gezeigt, ist bei dieser Anordnung kein resultierender Kreisstrom bewirkt, da in der Draufsicht aus axialer Richtung jeder gebildete magnetische Pol von einem jeweiligen Kreisstrom umströmt wird. Ein in Umfangrichtung um die Achse, also den Mittelpunkt der Darstellung nach Figur 6, fließender Kreisstrom ist nicht vorhanden, obwohl die erste und zweite Wellenwicklung einen Strom um den Mittelpunkt herumführt. Denn jeder, in Figur 6 gezeigte, vier im Wesentlichen gerade Seiten aufweisende Pol ist durch drei Seiten einer der Wellenwicklungen und eine Seite der anderen Wellenwicklungen umströmt.

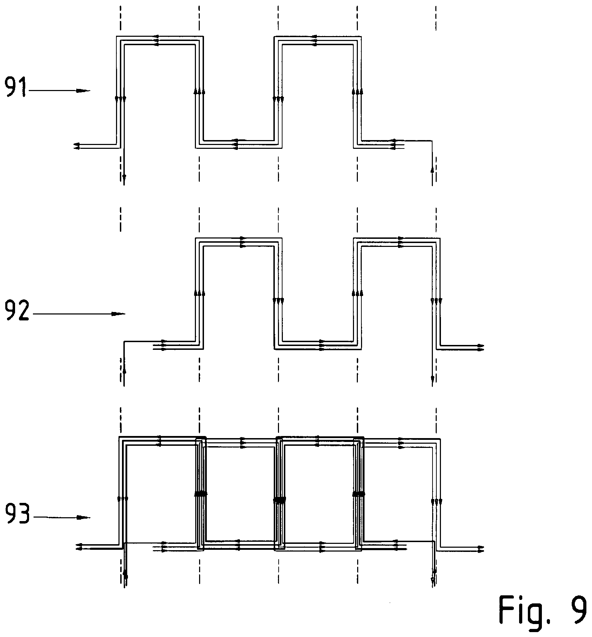

In Figur 9 ist das zu den Figuren 4, 5, und 6 zugehörige Wickelschema gezeigt, wobei das Wickelschema 91 zur Figur 4, das Wickelschema 92 zur Figur 5 und das Wickelschema 93 zur Figur 6 zugehört. Dabei stellt die Abszisse die Umfangswinkelrichtung dar. Die oberste der Wickelschemata ist der Figur 4 zugeordnet und geht durch Verdrehung um einen Winkel in das mittlere, zur Figur 5 gehörige Wickelschema über. Der Verdrehwinkel entspricht dabei wiederum der halben Periodenlänge der periodischen Funktion.

Wie in den Wickelschemata der Figur 9 gezeigt, ist eine Windungszahl von drei realisiert. Dabei führen an der radialen Innenseite eines jeweiligen Pols drei Leitungen in Umfangsrichtung und an der radialen Innenseite des jeweils zu diesem Pol in Umfangsrichtung nächstbenachbarten Pols drei Leitungen in entgegengesetzte Richtung. Analog sind auch die jeweilige drei Leitungen an der radialen Außenseite in zueinander entgegengesetzte Richtung geführt. Somit ist weder an der radialen Innenseite noch an der radialen Außenseite ein resultierender Kreisstrom erzeugt. Bei einem weiteren erfindungsgemäßen Ausführungsbeispiel ist statt der Windungszahl drei auch eine andere Zahl realisierbar.

### Bezugszeichenliste

1 Teilspule mit axial orientiertem Wickelsinn
2 Teilspule mit entgegengesetzt zur axialen Richtung orientiertem Wickelsinn
21 Teilspule mit axial orientiertem Wickelsinn
22 Teilspule mit entgegengesetzt zur axialen Richtung orientiertem Wickelsinn
31 Teilspule mit axial orientiertem Wickelsinn
32 Teilspule mit entgegengesetzt zur axialen Richtung orientiertem Wickelsinn
40 Wicklungsdraht, insbesondere Strompfad
41 Teilspule mit axial orientiertem Wickelsinn
42 Teilspule mit entgegengesetzt zur axialen Richtung orientiertem Wickelsinn
50 Wicklungsdraht, insbesondere Strompfad
51 Teilspule mit axial orientiertem Wickelsinn
52 Teilspule mit entgegengesetzt zur axialen Richtung orientiertem Wickelsinn
91 Wickelschema
92 Wickelschema
93 Wickelschema

## Patentansprüche

1. Elektromagnetisch betätigbare Bremse mit einer Bremsspule,
wobei die Bremsspule eine relativ zur Bremsspule drehbar angeordnete Bremsrotorwelle aufweist,
wobei die Bremsspule mehrere Teilspulen (21, 22) aufweist,
wobei die Teilspulen (21, 22) in Umfangsrichtung hintereinander angeordnet sind und zur jeweils in Umfangsrichtung nächstbenachbarten Teilspule (21, 22) einen unterschiedlichen Wicklungssinn aufweisen, so dass die Teilspulen (21, 22) mit einem ersten Wicklungssinn eine erste Sorte und die Teilspulen (21, 22) mit dem entgegengesetzten Wicklungssinn eine zweite Sorte bilden,
**dadurch gekennzeichnet, dass** die Teilspulen (21, 22) durch zumindest eine erste Wellenwicklung und eine zweite Wellenwicklung gebildet sind,
wobei jede der beiden Wellenwicklungen in Umfangsrichtung umlaufend verlegt ist, wobei der Radialabstand der jeder der beiden Wellenwicklungen eine periodische Funktion des Umfangswinkels ist,
- wobei die erste und zweite Wellenwicklung gleichartig ausgeführt sind, aber zueinander einen Versatz in Umfangsrichtung aufweisen,
- und/oder wobei die zweite Wellenwicklung zur ersten invertiert ist bezogen auf einen Kreis, dessen Radialabstand dem Mittelwert aus maximalem und minimalem Radialabstand der Funktion entspricht,
wobei die erste Wellenwicklung in einem axialen Bereich angeordnet ist, der sich von demjenigen axialen Beriech unterscheidet, in welchem die zweite Wellenwicklung angeordnet ist.

2. Elektromagnetisch betätigbare Bremse nach Anspruch 1,
**dadurch gekennzeichnet, dass**
die periodische Funktion eine Rechteckfunktion ist.

3. Elektromagnetisch betätigbare Bremse nach Anspruch 1 oder 2,
**dadurch gekennzeichnet, dass**
jeder der beiden Wellenwicklungen einen in Umfangsrichtung umlaufend verlegten Wicklungsdraht (50) aufweist, dessen Radialabstand eine periodische Funktion des Umfangswinkels ist.

4. Elektromagnetisch betätigbare Bremse nach mindestens einem der vorangegangenen Ansprüche,
**dadurch gekennzeichnet, dass**
die erste Wellenwicklung in einem ersten axialen Bereich angeordnet und die zweite Wellenwicklung in einem davon unterschiedlichen axialen Bereich, der von dem ersten axialen Bereich beabstandet ist oder höchstens an diesen angrenzt.

5. Elektromagnetisch betätigbare Bremse nach mindestens einem der vorangegangenen Ansprüche,
**dadurch gekennzeichnet, dass**
jede Teilspule (21, 22) mit ihrer in Umfangsrichtung nächstbenachbarten Teilspule (21, 22) zumindest über zwei Wicklungsdrahtabschnitte direkt verbunden ist.

6. Elektromagnetisch betätigbare Bremse mit einer Bremsspule,
wobei die Bremsspule eine relativ zur Bremsspule drehbar angeordnete Bremsrotorwelle aufweist,
wobei die Bremsspule mehrere Teilspulen (21, 22) aufweist,
wobei die Teilspulen (21, 22) in Umfangsrichtung hintereinander angeordnet sind und zur jeweils in Umfangsrichtung nächstbenachbarten Teilspule (21, 22) einen unterschiedlichen Wicklungssinn aufweisen,
wobei die Bremsspule eine die Teilspulen (21, 22) bildende und/oder umfassende Schleifenwicklung, aufweist,
**dadurch gekennzeichnet, dass** in Umfangsrichtung nächstbenachbarte Teilspulen (21, 22) in unterschiedlichen axialen Bereichen angeordnet sind.

7. Elektromagnetisch betätigbare Bremse nach Anspruch 6,
**dadurch gekennzeichnet, dass**
die Schleifenwicklung in Umfangsrichtung überlappend ausgeführt ist.

8. Elektromagnetisch betätigbare Bremse nach Anspruch 6 oder 7,
**dadurch gekennzeichnet, dass**
die Anordnung der Teilspulen (21, 22) aus zwei Teilspulen-Anordnungen zusammengesetzt ist, wobei die Teilspulen (21, 22) mit Ausnahme des Wicklungssinns gleichartig aufgebaut und die Anordnungen in Umfangsrichtung gegeneinander verdreht sind, wobei der Umfangswinkelversatz in Umfangsrichtung die Hälfte des Winkelabstandes zweier in Umfangsrichtung nächstbenachbarten Teilspulen (21, 22) beträgt.

9. Elektromagnetisch betätigbare Bremse nach einem der Ansprüche 6 bis 8,
**dadurch gekennzeichnet, dass**
die Schleifenwicklung aus separat bewickelten jeweiligen Teilspule (21, 22) zusammengesetzt ist.

10. Elektromagnetisch betätigbare Bremse nach einem der Ansprüche 6 bis 9,
**dadurch gekennzeichnet, dass**
in Umfangsrichtung nächstbenachbarte Teilspulen (21, 22) denselben axialen Bereich überdecken.

11. Elektromagnetisch betätigbare Bremse nach einem der Ansprüche 6 bis 10,
**dadurch gekennzeichnet, dass**
die Teilspulen (21, 22) in Umfangsrichtung regelmäßig voneinander beabstandet sind.

12. Elektromagnetisch betätigbare Bremse nach einem der Ansprüche 6 bis 11,
**dadurch gekennzeichnet, dass**
die Teilspulen (21, 22) axial orientiert sind, also die von der jeweiligen Teilspulenwicklung erzeugte Magnetisierungsrichtung axial orientiert ist, also senkrecht zur Umfangsrichtung und/oder parallel zur Symmetrieachse der Bremsspule und/oder parallel zur Bremsrotorwellenachse.

13. Elektromagnetisch betätigbare Bremse nach einem der Ansprüche 6 bis 12,
**dadurch gekennzeichnet, dass**
jede Wicklung mehrere, zumindest abschnittsweise parallel geführte Wicklungsdrähte aufweist, so dass die Windungszahl jeder Teilspule (21, 22) größer als 1 ist.

## Claims

1. An electromagnetically actuatable brake having a brake coil,
wherein the brake coil has a brake rotor shaft rotatably arranged relative to the brake coil, wherein the brake coil has a plurality of partial coils (21, 22),
wherein the partial coils (21, 22) are arranged in series in a circumferential direction and have a different winding direction to the partial coil (21, 22) next-adjacent in a circumferential direction in each case, so that the partial coils (21, 22) with a first winding direction form a first type and the partial coils (21, 22) with the opposite winding direction form a second type, **characterised in that**
the partial coils (21, 22) are formed by at least a first wave winding and a second wave winding, wherein each of the two wave windings is laid circumferentially in a circumferential direction, wherein the radial spacing of each of the two wave windings is a periodic function of the circumferential angle,
- wherein the first and second wave winding are of the same kind of design, however are offset in relation to one another in a circumferential direction,
- and/or wherein the second wave winding is inverted in relation to the first related to a circle whose radial spacing corresponds to the average value of maximum and minimum radial spacing of the function,
- wherein the first wave winding is arranged in an axial region which differs from that axial region in which the second wave winding is arranged.

2. An electromagnetically actuatable brake according to claim 1,
**characterised in that**
the periodic function is a rectangular function.

3. An electromagnetically actuatable brake according to claim 1 or 2,
**characterised in that**
each of the two wave windings has a winding wire (50) laid circumferentially in a circumferential direction, the radial spacing of which winding wire is a periodic function of the circumferential angle.

4. An electromagnetically actuatable brake according to at least one of the preceding claims,
**characterised in that**
the first wave winding is arranged in a first axial region and the second wave winding in an axial region different therefrom, which is at a distance from the first axial region or at most adjoins the latter.

5. An electromagnetically actuatable brake according to at least one of the preceding claims,
**characterised in that**
each partial coil (21, 22) is directly connected at least via two winding wire portions to its partial coil (21, 22) next-adjacent in a circumferential direction.

6. An electromagnetically actuatable brake having a brake coil,
wherein the brake coil has a brake rotor shaft rotatably arranged relative to the brake coil, wherein the brake coil has a plurality of partial coils (21, 22),
wherein the partial coils (21, 22) are arranged in series in a circumferential direction and have a different winding direction to the partial coil (21, 22) next-adjacent in a circumferential direction in each case,
wherein the brake coil has a lap winding forming and/or comprising the partial coils (21, 22),
**characterised in that**
partial coils (21, 22) next-adjacent in a circumferential direction are arranged in different axial regions.

7. An electromagnetically actuatable brake according to claim 6,
**characterised in that**
the lap winding is configured to overlap in a circumferential direction.

8. An electromagnetically actuatable brake according to claim 6 or 7,
**characterised in that**
the arrangement of the partial coils (21, 22) is assembled from two partial-coil arrangements, wherein the partial coils (21, 22) are of the same kind of design with the exception of the winding direction and the arrangements are rotated relative to one another in a circumferential direction, wherein the circumferential angle offset in a circumferential direction amounts to half the angular spacing of two partial coils (21, 22) next-adjacent in a circumferential direction.

9. An electromagnetically actuatable brake according to any one of claims 6 to 8,
**characterised in that**
the lap winding is assembled from separately wound partial coils (21, 22).

10. An electromagnetically actuatable brake according to any one of claims 6 to 9,
**characterised in that**
partial coils (21, 22) next-adjacent in a circumferential direction cover the same axial region.

11. An electromagnetically actuatable brake according to any one of claims 6 to 10,
**characterised in that**
the partial coils (21, 22) are regularly spaced apart from one another in a circumferential direction.

12. An electromagnetically actuatable brake according to any one of claims 6 to 11,
**characterised in that**
the partial coils (21, 22) are oriented axially, therefore the magnetisation direction generated by the respective partial-coil winding is oriented axially, therefore perpendicularly to the circumferential direction and/or parallel to the axis of symmetry of the brake coil and/or parallel to the brake rotor shaft axis.

13. An electromagnetically actuatable brake according to any one of claims 6 to 12,
**characterised in that**
each winding has a plurality of winding wires at least portions of which are guided in a parallel manner, so that the number of turns of each partial coil (21, 22) is greater than 1.

## Revendications

1. Frein à actionnement électromagnétique doté d'une bobine de frein,
la bobine de frein présentant un arbre de rotor de frein disposé de manière à pouvoir tourner par rapport à la bobine de frein,
la bobine de frein présentant plusieurs bobines partielles (21, 22),
dans lequel les bobines partielles (21, 22) sont disposées les unes derrière les autres dans la direction circonférentielle et présentent un sens d'enroulement différent par rapport à la bobine partielle (21, 22) la plus proche respectivement dans la direction circonférentielle de sorte que les bobines partielles (21, 22) ayant un premier sens d'enroulement constituent un premier type et les bobines partielles (21, 22) ayant le sens d'enroulement opposé constituent un deuxième type,
**caractérisé en ce que** les bobines partielles (21, 22) sont formées par au moins un premier enroulement ondulé et un deuxième enroulement ondulé,
chacun des deux enroulements ondulés étant posé en tournant dans la direction circonférentielle, la distance radiale de chacun des deux enroulements ondulés étant une fonction périodique de l'angle circonférentiel,
- le premier et le deuxième enroulement ondulé étant réalisés de la même manière mais présentant un décalage mutuel dans la direction circonférentielle,
- et/ou le deuxième enroulement ondulé étant inversé par rapport au premier en se référant à un cercle dont la distance radiale correspond à la moyenne de la distance radiale maximale et minimale de la fonction,
le premier enroulement ondulé étant disposé dans une zone axiale qui est différente de la zone axiale dans laquelle est disposé le deuxième enroulement ondulé.

2. Frein à actionnement électromagnétique selon la revendication 1, **caractérisé en ce que** la fonction périodique est une fonction rectangulaire.

3. Frein à actionnement électromagnétique selon la revendication 1 ou 2, **caractérisé en ce que** chacun des deux enroulements ondulés présente un fil d'enroulement (50) posé en tournant dans la direction circonférentielle et dont la distance radiale est une fonction périodique de l'angle circonférentiel.

4. Frein à actionnement électromagnétique selon au moins l'une des revendications précédentes, **caractérisé en ce que** le premier enroulement ondulé est disposé dans une première zone axiale et le deuxième enroulement ondulé est disposé dans une zone axiale différente de celle-ci qui est espacée de la première zone axiale ou tout au plus adjacente à celle-ci.

5. Frein à actionnement électromagnétique selon au moins l'une des revendications précédentes, **caractérisé en ce que** chaque bobine partielle (21, 22) est reliée directement à la bobine partielle (21, 22) la plus proche dans la direction circonférentielle au moins par deux sections de fil d'enroulement.

6. Frein à actionnement électromagnétique doté d'une bobine de frein, dans lequel la bobine de frein présente un arbre de rotor de frein disposée de manière à pouvoir tourner par rapport à la bobine de frein,
la bobine de frein présentant plusieurs bobines partielles (21, 22),
dans lequel les bobines partielles (21, 22) sont disposées les unes derrière les autres dans la direction circonférentielle et présentent un sens d'enroulement différent par rapport à la bobine partielle (21, 22) la plus proche dans la direction circonférentielle,
la bobine de frein présentant un enroulement imbriqué formant et/ou comprenant les bobines partielles (21, 22),
**caractérisé en ce que** des bobines partielles (21, 22) les plus proches dans la direction circonférentielle sont disposées dans différentes zones axiales.

7. Frein à actionnement électromagnétique selon la revendication 6, **caractérisé en ce que** l'enroulement imbriqué est réalisé en recouvrement dans la direction circonférentielle.

8. Frein à actionnement électromagnétique selon la revendication 6 ou 7, **caractérisé en ce que** l'agencement des bobines partielles (21, 22) est composé de deux agencements de bobines partielles, dans lequel les bobines partielles (21, 22), à l'exception du sens d'enroulement, sont de même structure et les agencements sont tournés les uns par rapport aux autres dans la direction circonférentielle, le décalage d'angle circonférentiel dans la direction circonférentielle correspondant à la moitié de la distance d'enroulement de deux bobines partielles (21, 22) les plus proches dans la direction circonférentielle.

9. Frein à actionnement électromagnétique selon l'une quelconque des revendications 6 à 8, **caractérisé en ce que** l'enroulement imbriqué est composé de bobines partielles (21, 22) respectives enroulées séparément.

10. Frein à actionnement électromagnétique selon l'une quelconque des revendications 6 à 9, **caractérisé en ce que** des bobines partielles (21, 22) les plus proches dans la direction circonférentielle recouvrent la même zone axiale.

11. Frein à actionnement électromagnétique selon l'une quelconque des revendications 6 à 10, **caractérisé en ce que** les bobines partielles (21, 22) sont espacées régulièrement les unes des autres dans la direction circonférentielle.

12. Frein à actionnement électromagnétique selon l'une quelconque des revendications 6 à 11, **caractérisé en ce que** les bobines partielles (21, 22) sont orientées axialement, la direction d'aimantation de l'enroulement produite par les bobines partielles respectives étant donc orientée axialement, c'est-à-dire perpendiculairement à la direction circonférentielle et/ou en parallèle à l'axe de symétrie de la bobine de frein et/ou en parallèle à l'axe d'arbre de rotor de frein.

13. Frein à actionnement électromagnétique selon l'une quelconque des revendications 6 à 12, **caractérisé en ce que** chaque enroulement présente plusieurs fils d'enroulement guidés en parallèle au moins par endroits, de sorte que le nombre de spires de chaque bobine partielle (21, 22) est supérieur à 1.
